(19) Europäisches Patentamt
European Patent Office
Office européen des brevets

(11) **EP 2 327 625 B1**

(12) **FASCICULE DE BREVET EUROPEEN**

(45) Date de publication et mention
de la délivrance du brevet:
**14.03.2012 Bulletin 2012/11**

(51) Int Cl.:
***B64C 27/14*** *(2006.01)*   ***B64D 35/00*** *(2006.01)*
***F02C 6/14*** *(2006.01)*   ***B64C 27/12*** *(2006.01)*
***B64D 35/04*** *(2006.01)*

(21) Numéro de dépôt: **10013887.4**

(22) Date de dépôt: **22.10.2010**

(54) **Installation motrice, hélicoptère comportant une telle installation motrice, et procédé mis en oeuvre par cette installation motrice**

Antriebssystem, Hubschrauber beinhaltend ein solches Antriebssystem und Verfahren ausgeführt durch ein solches Antriebssystem.

Power plant, helicopter comprising such a power plant and method carried out by such power plant.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.11.2009 FR 0905678**

(43) Date de publication de la demande:
**01.06.2011 Bulletin 2011/22**

(73) Titulaire: **EUROCOPTER**
**13725 Marignane Cédex (FR)**

(72) Inventeur: **Certain, Bernard**
**13090 Aix En Provence (FR)**

(74) Mandataire: **Pouillot, Laurent Pierre Paul**
**GPI & Associés**
**1330 Rue Guillibert de la Lauzière**
**EuroParc de Pichauny, Bât B2**
**13856 Aix-en-Provence Cedex 3 (FR)**

(56) Documents cités:
**EP-A1- 2 148 066     DE-A1-102007 017 332**
**FR-A1- 2 769 584     FR-A1- 2 914 697**

**Description**

La présente invention concerne une installation motrice, un hélicoptère comportant une telle installation motrice, et un procédé mis en oeuvre par cette installation motrice. L'invention se situe donc dans le domaine technique des installations motrices d'hélicoptère.

En effet, un hélicoptère est classiquement pourvu d'une voilure tournante pour assurer sa sustentation et sa propulsion. De plus, un hélicoptère comporte parfois un rotor arrière anticouple pour contrecarrer le couple exercé par la voilure tournante sur le fuselage de cet hélicoptère.

Afin d'entraîner en rotation la voilure tournante, et le rotor anticouple le cas échéant, l'hélicoptère comporte une installation motrice.

Cette installation motrice met en oeuvre un ou plusieurs moteurs thermiques. Il est à noter que l'on entend dans l'ensemble du texte par « moteur thermique » les turbomoteurs ou encore l'ensemble des moteurs à pistons. L'expression « moteur thermique » est à opposer à l'expression « moteur électrique », l'expression « moteur électrique » qualifiant les moteurs mus par une énergie électrique tels que les moteurs dénommés « brushless » en langue anglaise par exemple.

Parmi les giravions, on trouve donc des hélicoptères dénommés « monomoteur » dont l'installation motrice comporte un unique moteur thermique pour mettre en mouvement la voilure tournante et le rotor anticouple le cas échéant. A l'inverse, certains hélicoptères possèdent au moins deux moteurs thermiques à cet effet.

On comprend que les hélicoptères monomoteurs présentent des avantages non négligeables par rapport aux hélicoptères munis d'une pluralité de moteurs thermiques. A titre d'exemple, on peut citer un coût raisonnable, des opérations de maintenance réduites, une consommation en carburant relativement faible. Le document FR2769684, qui décrit toutes les caractéristiques du préambule de la revendication 1, montre un tel hélicoptère monomoteur.

Cependant, ces hélicoptères monomoteurs présentent aussi des inconvénients.

En effet, en cas de pannes de l'unique moteur thermique de l'installation motrice d'un hélicoptère monomoteur, l'installation motrice présente des performances dégradées. A l'extrême, l'installation motrice peut se trouver dans l'incapacité d'entraîner la voilure tournante et le rotor anticouple ce qui est susceptible d'engendrer une situation catastrophique.

Dans ces conditions, le domaine de vol et les missions autorisées pour les hélicoptères monomoteurs sont réduits par les offices de certification délivrant les autorisations de vol. Il et notamment interdit de survoler une grande ville avec un hélicoptère monomoteur, la capitale de la France par exemple.

La présente invention a alors pour objet de proposer une installation motrice (revendication 1) d'un giravion monomoteur permettant de s'affranchir de la limitation mentionnée précédemment.

Selon l'invention, une installation motrice est munie d'un unique moteur thermique ainsi que d'une boîte de transmission principale de puissance apte à entraîner la voilure tournante d'un hélicoptère et d'une boîte de transmission arrière de puissance apte à entraîner un rotor anticouple d'un hélicoptère.

Comme indiqué précédemment, le moteur thermique peut être un turbomoteur ou encore un moteur à pistons.

Cette installation motrice est remarquable en ce qu'elle comporte un premier moteur électrique mécaniquement lié à ladite boîte de transmission principale pour pouvoir mettre en mouvement cette boîte de transmission principale et un deuxième moteur électrique mécaniquement lié à ladite boîte de transmission arrière pour pouvoir mettre en mouvement cette boîte de transmission arrière.

Le premier moteur électrique et le deuxième moteur électrique peuvent être des moteurs sans balais dénommé « brushless » en langue anglaise, et sont respectivement liés à un engrenage principal de la boîte de transmission principale et à un engrenage arrière de la boîte de transmission arrière.

Les premier et deuxième moteurs électriques ne mettent alors respectivement pas en mouvement la boîte de transmission arrière et la boîte de transmission principale. Ainsi, contrairement au document EP2148066, qui est compris dans l'état de la technique selon l'article 64(3) CBE, l'invention ne prévoit pas un turbomoteur et un moteur électrique entraînant un même moyen d'entraînement, mais un premier moteur entraînant directement uniquement une boîte de transmission principal et un deuxième moteur entraînant directement uniquement une boîte de transmission arrière .

Le premier moteur électrique et le deuxième moteur électrique peuvent fonctionner dans un mode de fonctionnement dénommé « mode moteur ». Un premier rotor du premier moteur électrique et un deuxième rotor du deuxième moteur électrique entrainent alors respectivement l'engrenage principal et l'engrenage arrière, via des première et deuxième chaînes mécaniques par exemple.

De plus, le premier moteur électrique et le deuxième moteur électrique peuvent fonctionner dans un mode de fonctionnement dénommé « mode générateur ». Durant ce mode de fonctionnement, l'engrenage principal et l'engrenage arrière mettent respectivement en rotation le premier rotor et le deuxième rotor, le premier moteur électrique et le deuxième moteur électrique générant alors un courant électrique. La génération de courant électrique par le premier moteur électrique et le deuxième moteur électrique peut être accompagnée par la création d'une force de freinage tendant à ralentir respectivement l'engrenage principal et l'engrenage arrière.

On se rapportera à la littérature pour obtenir plus d'informations sur les moteurs électriques fonctionnant selon ces deux modes.

Dans ces conditions, l'invention présente de multiples avantages.

Tout d'abord, en cas de pannes du turbomoteur, les premier et deuxième moteurs électriques entraînent la voilure tournante et le rotor anticouple ce qui permet à un pilote de se poser en toute sécurité sans avoir recours à une autorotation, procédure toujours aléatoire et difficile à mettre en oeuvre. Dès lors, le survol de grandes agglomérations devrait pouvoir être effectué sans risque, même avec un hélicoptère monomoteur.

En outre, le moteur thermique d'un hélicoptère monomoteur muni d'une installation motrice classique est dimensionné pour pouvoir fournir une puissance maximale permettant de couvrir l'intégralité du domaine de vol, alors que les phases nécessitant la puissance maximale ne représentent qu'une portion minime du domaine de vol. Ce surdimensionnement a des conséquences non négligeables par rapport au coût financier du moteur thermique.

Par contre, avec l'invention, il n'est plus nécessaire d'utiliser un tel moteur thermique. Il est en effet possible d'utiliser un moteur thermique développant une puissance limitée par rapport à la puissance maximale à mettre en oeuvre, les premier et deuxième moteurs électriques fournissant le surcroît de puissance nécessaire pour atteindre la puissance maximale le moment venu.

De plus, les performances des premier et deuxième moteurs électriques ne sont pas réduites par les conditions de température, altitude et de pression extérieures ce qui implique une certaine indépendance par rapport aux conditions extérieures.

Par suite, la puissance retenue pour dimensionner le moteur thermique est revue à la baisse du fait de la présence des premier et deuxième moteurs électriques. Il en résulte un gain important d'un point de vue financier, d'un point de vue consommation de carburant, ou encore au regard de la masse du moteur thermique.

Enfin, on verra par la suite qu'en mode générateur, les premier et deuxième moteurs peuvent ralentir les boîtes de transmission principale et arrière et éviter des incidents.

Par suite, l'installation motrice est particulièrement innovante en permettant le survol de grandes agglomérations à l'aide d'un unique moteur thermique, tout en réalisant des économies substantielles.

L'invention peut de plus présenter une ou plusieurs des caractéristiques additionnelles qui suivent.

Ainsi, le moteur thermique est éventuellement relié à la boîte de transmission principale par un premier arbre, la boîte de transmission arrière étant reliée par un deuxième arbre au moteur thermique ou à la boîte de transmission principale. Le moteur thermique entraîne donc la boîte de transmission arrière directement ou indirectement par la boîte de transmission principale.

On comprend que le premier arbre peut comprendre un unique tronçon ou encore une pluralité de tronçons, chaque tronçon étant fixé à au moins un tronçon adjacent. De même, le deuxième arbre peut comprendre un unique tronçon ou encore une pluralité de tronçons.

De plus, le deuxième arbre peut se situer dans le prolongement du premier arbre.

En outre, l'installation motrice étant apte à être agencée sur un hélicoptère pourvu d'une voilure tournante ayant un régime de rotation nominal donné, la boîte de transmission principale ayant une première limite donnée de couple, le premier moteur électrique a une première puissance électrique maximale égale à un premier pourcentage d'un premier produit du premier régime de rotation nominal et de la première limite, le premier pourcentage étant compris entre 20% et 40% dudit premier produit.

On rappelle qu'une voilure tournante d'un hélicoptère effectue une rotation à une vitesse prédéterminée par le constructeur. Plus précisément, le constructeur tolère une vitesse de rotation comprise entre une vitesse minimale, par exemple égale à 98% de la vitesse prédéterminée, et une vitesse maximale, par exemple égale à 102% de la vitesse prédéterminée.

Cette vitesse prédéterminée à respecter est dénommée régime de rotation nominal par l'homme du métier. Dès lors, ce régime de rotation nominal est parfaitement connu par cet homme du métier.

Ainsi, on dimensionne le premier moteur électrique en fonction de la première puissance maximale qu'il doit fournir. Cette première puissance définie à l'aide du premier pourcentage représente un compromis intéressant et inventif dans la mesure où un tel premier moteur permet de ne pas limiter les performances de l'hélicoptère tout en n'étant pas surdimensionné et par suite moins lourd et moins onéreux.

La première puissance électrique maximale permet en effet de poursuivre le vol à une vitesse dénommée « vitesse VY » après une panne du moteur thermique, moyennant éventuellement une légère chute de la vitesse de rotation de la voilure tournante. On rappelle que la vitesse VY correspond à la vitesse optimale de descente/montée à laquelle l'hélicoptère a un angle de plané le plus faible, soit environ 55 à 65 Kt (noeuds).

L'autorotation devient inutile, ou alors facile à mettre en oeuvre et à réaliser.

Selon une première variante d'agencement du premier moteur électrique, ce premier moteur électrique est agencé en série par rapport à une première chaîne mécanique d'entraînement de la boîte de transmission principale par le moteur thermique.

La boîte de transmission principale étant entraînée par un premier arbre, le premier moteur électrique est agencé sur ce premier arbre. Par exemple, le premier rotor du premier moteur électrique est solidaire en rotation du premier arbre.

Selon une deuxième variante d'agencement du premier moteur électrique, ce premier moteur électrique est agencé en parallèle par rapport à une première chaîne mécanique d'entraînement de la boîte de transmission principale par le moteur thermique.

La boîte de transmission principale étant entraînée par un premier arbre, le premier moteur électrique est agencé sur un arbre intermédiaire principal distinct du premier arbre. Par exemple, le premier rotor du premier moteur électrique est solidaire en rotation de l'arbre intermédiaire principal, cet arbre intermédiaire principal engrenant la boîte de transmission principale.

Par ailleurs, l'installation motrice étant apte à être agencée sur un hélicoptère pourvu d'une voilure tournante ayant un régime de rotation nominal donné, la boîte de transmission principale ayant une première limite donnée de couple, le deuxième moteur électrique a une deuxième puissance électrique maximale égale à un deuxième pourcentage d'un premier produit du régime de rotation nominal et de la première limite, le deuxième pourcentage étant compris entre 5% et 10% dudit premier produit.

Ainsi, on dimensionne le deuxième moteur électrique en fonction de la deuxième puissance maximale qu'il doit fournir. Cette deuxième puissance définie à l'aide du deuxième pourcentage représente un compromis intéressant et inventif dans la mesure où un tel deuxième moteur permet au giravion de demeurer en stationnaire tout en n'étant pas surdimensionné. Dès lors, le deuxième moteur n'est ni lourd ni onéreux.

Selon une première variante d'agencement du deuxième moteur électrique, ce deuxième moteur électrique est agencé en série par rapport à une deuxième chaîne mécanique d'entraînement de la boîte de transmission arrière par le moteur thermique.

La boîte de transmission arrière étant entraînée par un deuxième arbre, le deuxième moteur électrique est agencé sur ledit deuxième arbre. Par exemple, le deuxième rotor du deuxième moteur électrique est solidaire en rotation du deuxième arbre

Selon une deuxième variante d'agencement du deuxième moteur électrique, ce deuxième moteur électrique est agencé en parallèle par rapport à une deuxième chaîne mécanique d'entraînement de la boîte de transmission arrière par le moteur thermique.

La boîte de transmission arrière étant entraînée par un deuxième arbre, le deuxième moteur électrique est agencé sur un arbre intermédiaire arrière distinct de ce deuxième arbre. Par exemple, le deuxième rotor du deuxième moteur électrique est solidaire en rotation de l'arbre intermédiaire arrière, cet arbre intermédiaire arrière engrenant la boîte de transmission arrière.

Par ailleurs, l'installation motrice peut comporter un organe de régulation muni d'un processeur de régulation commandant le premier moteur électrique et le deuxième moteur électrique, cet organe de régulation étant lié électriquement :

- au premier moteur électrique et au deuxième moteur électrique,

- à au moins une batterie principale dédiée à l'alimentation électrique du premier moteur électrique et du deuxième moteur électrique.

Le processeur de régulation de l'organe de régulation peut comporter une mémoire, ou faire appel à une mémoire externe pourvue de lois de régulation.

La processeur de régulation ordonne le positionnement des premier et deuxième moteurs électriques en mode générateur ou en mode moteur et contrôle ces premier et deuxième moteurs électriques selon les lois prédéterminées, stockées dans sa mémoire de régulation.

De plus, l'organe de régulation est optionnellement lié électriquement à au moins une batterie secondaire apte à alimenter le réseau électrique d'un hélicoptère.

Les premier et deuxième moteurs électriques peuvent en mode générateur alimenter en électricité les batteries principale et secondaire, et peuvent donc remplacer les alternateurs classiquement agencés sur un hélicoptère.

De plus, en cas de panne de la batterie secondaire, l'organe de régulation ordonne éventuellement à la batterie principale d'alimenter le réseau électrique de l'hélicoptère.

En outre, les premier et deuxième moteurs électriques étant aptes à fonctionner en mode moteur ou en mode générateur d'un courant électrique, l'installation motrice comporte un moyen d'affichage présentant pour le premier moteur électrique et le deuxième moteur électrique :

- une indication de fonctionnement en mode moteur ou en mode générateur, au moins un organe de régulation indiquant le mode de fonctionnement à un processeur d'affichage du moyen d'affichage,

- le niveau de charge résiduel d'au moins une batterie principale des premier et deuxième moteurs électriques, un premier moyen de mesure de type usuel mesurant le niveau de charge résiduel et envoyant ce niveau de charge résiduel au processeur d'affichage.

De plus, le moyen d'affichage peut présenter au moins une des informations suivantes.

En premier lieu, le moyen d'affichage peut présenter un temps de fonctionnement restant pour au moins un des premier et deuxième moteurs électriques, au moins un deuxième moyen de mesure mesurant le temps de fonctionnement restant et transmettant ce temps de fonctionnement restant à un processeur d'affichage dudit moyen d'affichage. Ce deuxième moyen de mesure peut comprendre le moyen de régulation et le premier moyen de mesure du niveau de charge résiduel. Le moyen de régulation détermine la consommation de courant du moteur électrique concerné puis divise le niveau de charge résiduel par cette consommation pour en déduire le temps de fonctionnement restant.

En deuxième lieu, le moyen d'affichage peut présenter une température d'une batterie principale reliée électriquement au premier moteur électrique et/ ou au deuxième moteur électrique, au moins un troisième moyen de mesure de type usuel mesurant la température et transmettant cette température à un processeur d'affichage dudit moyen d'affichage.

On comprend que le processeur d'affichage peut faire appel à une mémoire interne ou externe pour remplir sa fonction.

Par ailleurs, l'installation motrice comporte optionnellement un moyen d'alarme muni d'un processeur d'alarme générant une alarme quand au moins une des situations suivantes se produit :

- au moins un premier moyen de mesure mesurant le niveau de charge résiduel d'au moins une batterie principale de chaque moteur électrique, le moyen d'alarme déclenche une alarme quand le niveau de charge résiduel mesuré passe en dessous d'un niveau de charge seuil prédéterminé,

- au moins un deuxième moyen de mesure mesurant un temps de fonctionnement restant pour au moins un des premier et deuxième moteurs électriques, le moyen d'alarme déclenche une alarme quand le temps de fonctionnement mesuré passe en dessous d'un temps seuil prédéterminé,

- au moins un troisième moyen de mesure mesurant une température d'une batterie principale reliée électriquement au premier moteur électrique et/ ou au deuxième moteur électrique, le moyen d'alarme déclenche une alarme quand la température mesurée passe au dessus d'une température seuil prédéterminée.

Il est aussi possible d'envisager de mesure l'ampérage du courant sortant de chaque batterie principale, et d'envoyer une alarme en cas d'ampérage nul.

On comprend que le processeur d'alarme peut faire appel à une mémoire interne ou externe pour remplir sa fonction.

De plus, lorsque l'installation motrice comporte au moins deux des processeurs à choisir parmi les processeurs de régulation, d'affichage et d'alarme, ces processeurs peuvent faire partie d'un seul et unique processeur remplissant diverses fonctions.

Enfin, les premier et deuxième moteurs électriques étant reliés à au moins une batterie principale électrique, l'installation motrice comporte avantageusement un moyen de mise hors circuit de cette batterie pour éviter tout incident au sol.

Outre une l'installation motrice, l'invention a pour objet un hélicoptère (revendication 15) muni d'une voilure tournante ainsi que d'un rotor anticouple et d'une installation motrice, cette installation motrice étant munie d'un unique moteur thermique ainsi que d'une boîte de transmission principale entraînant la voilure tournante et d'une boîte de transmission arrière entraînant le rotor anticouple.

L'installation motrice est alors telle décrite que précédemment en comportant notamment un premier moteur électrique mécaniquement lié à la boîte de transmission principale pour pouvoir mettre en mouvement cette boîte de transmission principale et un deuxième moteur électrique mécaniquement lié à la boîte de transmission arrière pour pouvoir mettre en mouvement cette boîte de transmission arrière.

De même, l'invention a pour objet un procédé (revendication 16) pour entraîner une voilure tournante et un rotor anticouple d'un hélicoptère, cette hélicoptère ayant une installation motrice munie d'un unique moteur thermique ainsi que d'une boîte de transmission principale entraînant ladite voilure tournante et d'une boîte de transmission arrière entraînant ledit rotor anticouple, cette installation motrice comportant un premier moteur électrique mécaniquement lié à ladite boîte de transmission principale pour pouvoir mettre en mouvement cette boîte de transmission principale et un deuxième moteur électrique mécaniquement lié à ladite boîte de transmission arrière pour pouvoir mettre en mouvement cette boîte de transmission arrière.

Ainsi, selon ce procédé on réalise au moins une des actions suivantes, éventuellement à l'aide d'un organe de régulation de l'installation motrice.

Le moteur thermique étant dimensionné pour fournir une puissance comprise dans une plage donnée, dans un mode de fonctionnement normal durant lequel le moteur thermique est à même de fournir ladite puissance pour laquelle il est dimensionné, on entraîne la boîte de transmission principale et la boîte de transmission arrière à l'aide de l'unique moteur thermique. Aucune panne étant signalée, le moteur thermique assume totalement sa fonction.

Dans un premier mode de secours, en cas de survitesse du moteur thermique à savoir si un organe mobile du moteur thermique dépasse une vitesse maximale donnée, on passe le premier moteur électrique en mode générateur électrique et le deuxième moteur électrique en mode générateur électrique pour ralentir le moteur thermique pendant une première durée prédéterminée, puis si le moteur thermique est toujours en survitesse à l'issue de ladite première durée on arrête le moteur thermique et on passe le premier moteur électrique en mode moteur électrique pour entraîner ladite boîte de transmission principale et on passe le deuxième moteur électrique en mode moteur électrique pour entraîner ladite boîte de transmission arrière.

Par exemple, un panne de la régulation d'un turbomoteur ou encore une fuite d'huile au palier d'un turbocompresseur d'un moteur à pistons peut engendrer une survitesse du moteur thermique, cette survitesse étant rare mais extrêmement dangereuse.

Une fois la survitesse détectée par exemple via des capteurs indiquant la vitesse de rotation de la voilure tournante et du rotor arrière voire la vitesse de déplacement d'un organe mobile du moteur thermique, du type compresseur voire la turbine pour un turbomoteur ou un des pistons d'un moteur à pistons, un organe de régulation de l'installation motrice passe les premier et deuxième moteurs électriques en mode générateur. Il en résulte la création d'une force tendant à freiner le mouvement des premier et deuxième arbres et par conséquent le moteur thermique.

Le courant généré sert alors à charger les diverses batteries de l'hélicoptère ou est dissipé dans une résistance par exemple

Si à l'issue d'une première durée, de l'ordre de 10 secondes par exemple, le moteur thermique est toujours en survitesse, le pilote de l'hélicoptère reçoit l'information de survitesse. Il arrête alors le moteur thermique. Les vitesses de rotation de la voilure tournante et du rotor anticouple décroissent en conséquence.

A compter d'une vitesse de rotation seuil de la voilure tournante et d'une vitesse de rotation seuil du rotor anticouple, l'organe de régulation ordonne alors aux premier et deuxième moteurs électriques de passer en mode moteur pour entraîner respectivement la boîte de transmission principale et la boîte de transmission arrière.

Dans un deuxième mode de secours, le moteur thermique n'étant plus à même de mettre en mouvement la boîte de transmission principale à une première vitesse donnée, on passe le premier moteur électrique en mode moteur électrique pour au moins participer à l'entraînement de la boîte de transmission principale.

Un capteur classique peut mesurer la vitesse de rotation d'un organe de la boîte de transmission principale par exemple et envoyer l'information à un organe de régulation. L'organe de régulation active le deuxième mode de secours lorsque la vitesse de rotation dudit organe de la boîte de transmission principale passe en dessous d'une première vitesse prédéterminée.

Cette situation peut se produire lorsque le premier arbre d'entraînement de la boîte de transmission principale est rompu.

Dans un troisième mode de secours, le moteur thermique n'étant plus à même de mettre en mouvement ladite boîte de transmission arrière à une deuxième vitesse donnée, on passe le deuxième moteur électrique en mode moteur électrique pour au moins participer à l'entraînement de ladite boîte de transmission arrière.

Un capteur classique peut mesurer la vitesse de rotation d'un organe de la boîte de transmission arrière par exemple et envoyer l'information à un organe de régulation. L'organe de régulation active le troisième mode de secours lorsque la vitesse de rotation dudit organe de la boîte de transmission arrière passe en dessous d'une deuxième vitesse prédéterminée.

Cette situation peut se produire lorsque le deuxième arbre d'entraînement de la boîte de transmission arrière est rompu.

Dans un quatrième mode de secours, le moteur thermique n'étant plus à même de mettre en mouvement la boîte de transmission principale à une première vitesse donnée et de mettre en mouvement ladite boîte de transmission arrière à une deuxième vitesse donnée, on passe le premier moteur électrique en mode moteur électrique pour au moins participer à l'entraînement de ladite boîte de transmission principale et on passe le deuxième moteur électrique en mode moteur électrique pour au moins participer à l'entraînement de ladite boîte de transmission arrière.

Lorsque le moteur thermique ne fonctionne plus, les premier et deuxième moteurs électriques participent seuls à l'entraînement des boîtes de transmission. A contrario, lorsque le moteur thermique fonctionne au ralenti suite à fuite d'une canalisation ou à une vitesse réduite suite à une avarie ou un impact, les premier et deuxième moteurs électriques participent à l'entraînement des boîtes de transmission conjointement avec le moteur thermique.

L'invention et ses avantages apparaîtront avec plus de détails dans le cadre de la description qui suit avec des exemples de réalisation donnés à titre illustratif en référence aux figures annexées qui représentent :

- la figure 1, un schéma présentant une installation motrice présentant une première variante d'agencement du premier moteur électrique et une première variante d'agencement du deuxième moteur électrique,

- la figure 2, un schéma présentant une deuxième variante d'agencement du premier moteur électrique,

- la figure 3, un schéma présentant une deuxième variante d'agencement du deuxième moteur électrique, et

- la figure 4, un schéma présentant un hélicoptère selon l'invention.

Les éléments présents dans plusieurs figures distinctes sont affectés d'une seule et même référence.

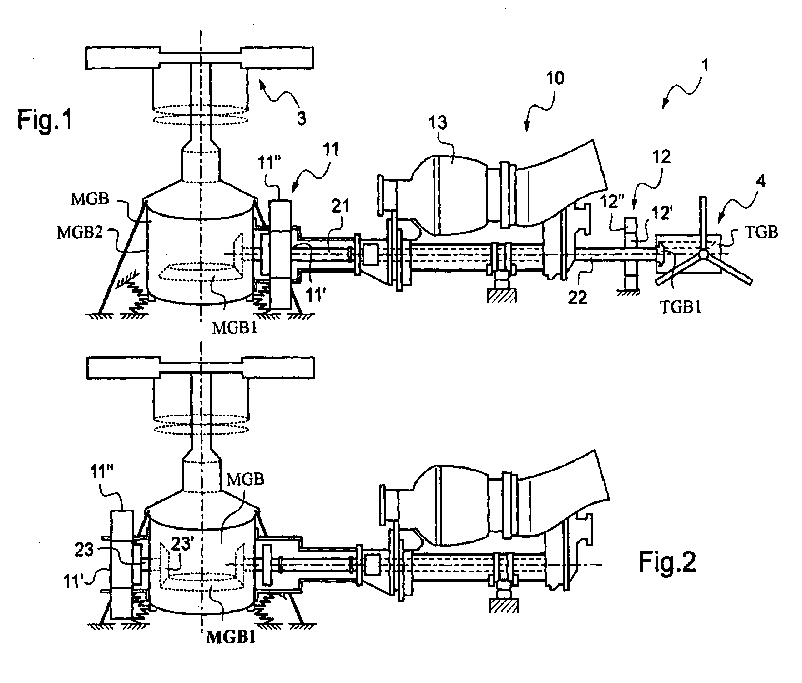

La figure 1 présente un hélicoptère 1 muni d'une voilure tournante 3 comportant un rotor principal de sustentation et de propulsion. De plus, l'hélicoptère 1 possède un rotor anticouple 4 agencé à l'arrière de la cellule de l'hélicoptère.

Pour entraîner cette voilure tournante 3 et ce rotor arrière 4, l'hélicoptère 1 est équipé d'une installation motrice 10 munie d'un unique moteur thermique 13 ainsi que d'une boîte de transmission principale BTP entraînant la voilure tournante 3 et d'une boîte de transmission arrière BTA entraînant le rotor anticouple 4. Le moteur thermique 13 met alors en mouvement directement la boîte de transmission principale BTP, et directement ou indirectement selon le mode de réalisation la boîte de transmission arrière BTA.

Plus précisément, le moteur thermique 13 entraîne un premier arbre 21 qui met en mouvement un engrenage principal BTP1 de la boîte de transmission principale BTP.

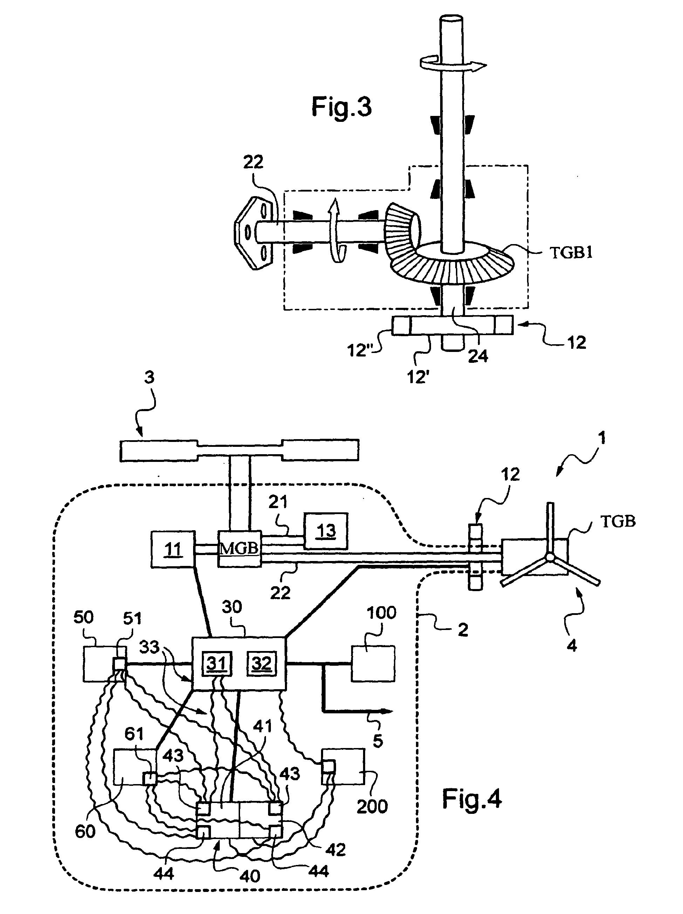

De plus selon le mode de réalisation de la figure 1, le moteur thermique 13 entraîne un deuxième arbre 22 qui met en mouvement un engrenage arrière BTA1 de la boîte de transmission arrière BTA, le premier arbre 21 et le deuxième arbre 22 étant dans le prolongement l'un de l'autre. Par contre, selon le mode de réalisation de la figure 4 le moteur thermique 13 met en mouvement la boîte de transmission principale BTP qui engrène le deuxième arbre 22, ce deuxième arbre 22 entraînant la boîte de transmission arrière BTA.

Ainsi, indépendamment du mode de réalisation, la boîte de transmission principale BTP est entraînée par le moteur thermique 13 en dernier lieu par le premier arbre 21, alors que la boîte de transmission arrière BTA est entraînée en dernier lieu par le deuxième arbre 22.

De plus, en référence à la figure 1, l'installation motrice comporte un premier moteur électrique 11 apte à mettre en mouvement l'engrenage principal BTP1 de la boîte de transmission principale BTP et un deuxième moteur électrique 12 apte à mettre en mouvement l'engrenage arrière BTA1 de la boîte de transmission arrière BTA.

Chaque moteur électrique 11, 12 peut fonctionner soit dans un mode dénommé « mode moteur » durant lequel le stator du moteur électrique requiert une rotation du rotor du moteur électrique pour entrainer l'arbre associé, soit dans un mode dénommé « moteur générateur » durant lequel le rotor du moteur électrique est mis en rotation par l'arbre associé pour générer un courant électrique.

Selon une première variante de l'agencement du premier moteur électrique 11, ce premier moteur électrique 11 est agencé sur le premier arbre 21. En effet, le premier moteur électrique 11 ayant un premier stator 11" et un premier rotor 11', le premier rotor 11' est solidarisé en rotation au premier arbre 21. On note que le premier stator 11" est par exemple fixé à un carter BTP2 de la boîte de transmission principale BTP.

De même, selon une première variante de l'agencement du deuxième moteur électrique 12, ce deuxième moteur électrique 12 est agencé sur le deuxième arbre 22. En effet, le deuxième moteur électrique 12 ayant un deuxième stator 12" et un deuxième rotor 12', le deuxième rotor 12' est solidarisé en rotation au deuxième arbre 22.

Selon une deuxième variante de l'agencement du premier moteur électrique 11 représentée sur la figure 2, le premier moteur électrique 11 est agencé sur un arbre intermédiaire principal 23 apte à mettre en mouvement l'engrenage principal BTP1 de la boîte de transmission principale BTP via un pignon conique 23' par exemple. Ainsi, le premier rotor 11' est solidarisé en rotation à l'arbre intermédiaire principal 23.

De même, selon une deuxième variante de l'agencement du deuxième moteur électrique 12 représentée sur la figure 3, le deuxième moteur électrique 12 est agencé sur un arbre intermédiaire arrière 24 apte à mettre en mouvement l'engrenage arrière BTA1 de la boîte de transmission arrière BTA. Ainsi, le deuxième rotor 12' est solidarisé en rotation à l'arbre intermédiaire arrière 24, cet arbre intermédiaire arrière 24 étant solidaire d'un pignon conique de la boîte de transmission arrière BTA par exemple.

Par ailleurs, la voilure tournante 3 ayant un régime de rotation nominal donné Nr1, la boîte de transmission principale BTP ayant une première limite donnée de couple Trq1, le premier moteur électrique 11 développe une première puissance électrique maximale PMAX1 égale à un premier pourcentage PRCT1 du premier produit Q1 dudit régime de rotation nominal Nr1 et de ladite première limite Trq1, ce premier pourcentage étant compris entre 20% et 40% dudit premier produit Q1, soit :

$$PMAX1 = PRCT1 \, {}^{*} \, Q1$$

avec Q1=Nr1 * Trq1, et « * » qui représente le signe de la multiplication.

De même, ledit deuxième moteur électrique 12 a une deuxième puissance électrique maximale PMAX2 égale à un deuxième pourcentage PRCT2 du premier produit Q1 dudit régime de rotation nominal Nr1 de la voilure tournante 3 et de ladite première limite Trq1, ledit deuxième pourcentage PRCT2 étant compris entre 5% et 10% dudit premier produit Q1, soit :

$$PMAX2 = PRCT2 \, {}^{*} \, Q1$$

avec Q1=Nr1 * Trq1, et « * » qui représente le signe de la multiplication.

En référence à la figure 4, à l'intérieur de la cellule 2 de l'hélicoptère 1, l'installation motrice 10 peut comporter un organe de régulation 30 muni d'un processeur de régulation 31 pour commander le premier moteur électrique 11 et le deuxième moteur électrique 12, à l'aide de lois programmées dans une mémoire 32 de régulation de l'organe de régulation 30. Dès lors, l'organe de régulation 30 est lié électriquement au premier moteur électrique 11, au deuxième moteur électrique 12, et à un ensemble 40 de batteries principales muni d'au moins une batteries principale dédiée à l'alimentation électrique du premier moteur électrique 11 et du deuxième moteur électrique 12, par exemple un ensemble de batterie principal 40 ayant deux batteries principales 41, 42. De plus, l'organe de régulation 30 représenté est lié électriquement à au moins une batterie secondaire 100 alimentant le réseau électrique 5 de l'hélicoptère 1.

Par ailleurs, l'installation motrice 10 comporte un moyen d'affichage 50 présentant pour le premier moteur électrique 11 et le deuxième moteur électrique 12 une indication de fonctionnement en mode moteur ou en mode générateur. En effet, l'organe de régulation 30 indique à un processeur d'affichage 51 du moyen d'affichage 50 s'il requiert le fonctionnement des premier et deuxième moteurs électriques en mode moteur ou en mode générateur.

Par exemple, le moyen d'affichage présente numériquement le temps de fonctionnement en mode moteur ou générateur, l'emplacement ou encore la couleur de l'affichage numérique dépendant du mode de fonctionnement.

Avantageusement, un premier moyen de mesure 43 usuel mesurant le niveau de charge résiduel d'une batterie principal et transmettant ce niveau de charge résiduel au processeur d'affichage 51, le processeur d'affichage 51 affichant sur un écran le niveau de charge résiduel pour le présenter au pilote de l'hélicoptère 1.

En outre, le moyen d'affichage 50 présente un temps de fonctionnement restant pour au moins un des premier et deuxième moteurs électriques 11, 12, au moins un deuxième moyen de mesure 33 mesurant le temps de fonctionnement restant et transmettant ce temps de fonctionnement au processeur d'affichage 51. Pour simplifier l'installation, le deuxième moyen de mesure 33 comporte le premier moyen de mesure 43 et l'organe de régulation 31, l'organe de régulation 31 déduisant en temps réel le temps de fonctionnement restant en fonction d'une part du niveau de charge de l'ensemble 40 des batteries principales 41, 42 et, d'autre part, de la consommation de courant électrique des premier et deuxième moteurs électriques 11, 12.

Enfin, un troisième moyen de mesure 44 par batterie principale 41, 42 mesure la température de l'ensemble 40 des batteries principales 41, 42 et l'envoie au processeur d'affichage 51 pour son affichage sur un écran de visualisation.

Pour aider le pilote, l'installation motrice comporte optionnellement un moyen d'alarme 60 muni d'un processeur d'alarme 61 générant une alarme sonore ou visuelle quand le niveau de charge résiduel passe en dessous d'un niveau de charge seuil prédéterminé, le temps de fonctionnement restant passe en dessous d'un temps seuil prédéterminé, ou quand la température des batteries principales passe au dessus d'une température seuil prédéterminée.

Il est à noter qu'il est possible d'envisager une alarme intermédiaire, signalant au pilote que la température risque de dépasser ladite température seuil. Ainsi, si la température des batteries principales passe au dessus d'une température intermédiaire, inférieure à la température seuil, on déclenche une alarme intermédiaire.

Pour activer ou arrêter les moteurs électriques, le pilote utilise un moyen de mise hors circuit 200 de l'ensemble de batteries principales 40, incluant deux batteries principales 41, 42 sur la figure 4.

Tant que le moteur thermique fonctionne normalement à savoir en développant la puissance requise dans les spécifications, dans un mode de fonctionnement normal, les boîtes de transmission principale BTP et arrière BTA sont entraînées uniquement le moteur thermique 13.

Par contre, si des organes mobiles du moteur thermique se déplaçant à des vitesses proscrites par le fabricant, ce moteur thermique se trouve en survitesse. Des capteurs dédiés à cet effet transmettent une information de survitesse à l'organe de régulation 30, mesurant par exemple la vitesse de rotation desdits organes ou mesurant la vitesse de rotation de la voilure tournante proportionnelle de fait à la vitesse de déplacement desdits organes. Dès lors, l'organe de régulation 30 déclenche un premier mode de secours et ordonne aux premier et deuxième moteurs électriques 11, 12 de fonctionner en mode générateur pour tenter de ralentir le moteur thermique.

A l'issue d'une première durée donnée, si le moteur thermique est toujours en survitesse, l'organe de régulation 30 ou un autre élément de l'hélicoptère transmet l'information de survitesse au pilote. Le pilote arrête alors le moteur thermique, via un robinet coupe feu par exemple apte à fermer l'alimentation en carburant du moteur thermique.

Il en résulte une chute de la vitesse de rotation de la voilure tournante 3 en dessous d'une première vitesse donnée et une chute de la vitesse de rotation du rotor anticouple 4 en dessous d'une deuxième vitesse donnée. Or, l'organe de régulation reçoit une information relative à cette vitesse de rotation de la voilure tournante 3 via un capteur usuel, relative de fait à la vitesse de déplacement desdits organes et à la vitesse de rotation du rotor anticouple 4. Dès lors, lorsque la vitesse de rotation de la voilure tournante 3 passe en dessous de la première vitesse donnée et lorsque la vitesse de rotation du rotor anticouple 4 passe en dessous de la deuxième vitesse donnée, l'organe de régulation 30 ordonne aux premier et deuxième moteurs électriques 11, 12 de fonctionner en mode moteur pour entraîner la voilure tournante 3 et le rotor anticouple 4 via les boîtes de transmission principale BTP et arrière BTA.

Il est à noter qu'en dehors du premier mode de secours, l'organe de régulation 30 ordonne :

- seulement au premier moteur électrique 11 de fonctionner en mode moteur durant un deuxième mode de secours pour entraîner la voilure tournante 3 si la vitesse de rotation de la voilure tournante 3 passe en dessous de ladite première vitesse donnée,

- seulement au deuxième moteur électrique 12 de fonctionner en mode moteur durant un troisième mode de secours pour entraîner le rotor anticouple 4 si la vitesse de rotation du rotor anticouple 4 passe en dessous ladite deuxième vitesse donnée,

- conjointement au premier moteur électrique 11 et au deuxième moteur électrique 12 de fonctionner en mode moteur durant un quatrième mode de secours pour entraîner la voilure tournante 3 et le rotor anticouple 4, quand la vitesse de rotation de la voilure tournante 3 et du rotor anticouple 4 passe respectivement en dessous de ladite première vitesse donnée et de ladite deuxième vitesse donnée.

On note que les premier et deuxième moteurs électriques ainsi que l'ensemble de batteries principales et l'organe de régulation associés sont avantageusement indépendant des équipements usuels d'un hélicoptère à savoir notamment le moteur thermique et le réseau électrique de l'hélicoptère. Dès lors, l'invention constitue un moyen de secours efficace en cas de dysfonctionnement voire de panne des équipements classiques d'un hélicoptère. Ainsi, l'invention permet de conférer à un hélicoptère monomoteur un niveau de sécurité au moins aussi élevé que le niveau de sécurité atteint avec un hélicoptère bimoteur.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

**1.** Installation motrice (10) munie d'un unique moteur thermique (13) ainsi que d'une boîte de transmission principale (BTP) apte à entraîner la voilure tournante (3) d'un hélicoptère (1) et d'une boîte de transmission arrière (BTA) apte à entraîner un rotor anticouple (4) d'un hélicoptère (1),
**caractérisée en ce qu'**elle comporte un premier moteur électrique (11) mécaniquement lié à ladite boîte de transmission principale (BTP) pour pouvoir mettre en mouvement cette boîte de transmission principale (BTP) et un deuxième moteur électrique (12) mécaniquement lié à ladite boîte de transmission arrière (BTA) pour pouvoir mettre en mouvement cette boîte de transmission arrière (BTA).

**2.** Installation motrice selon la revendication 1,
**caractérisée en ce que** ledit moteur thermique (13) est relié à ladite boîte de transmission principale (BTP) par un premier arbre (21), ladite boîte de transmission arrière (BTA) étant reliée par un deuxième arbre (22) audit moteur thermique (13) ou à ladite boîte de transmission principale (BTP).

**3.** Installation motrice selon l'une quelconque des revendications 1 à 2,
**caractérisée en ce que**, ladite installation motrice (10) étant apte à être agencée sur un hélicoptère (1) pourvu d'une voilure tournante (3) ayant un régime de rotation nominal donné, ladite boîte de transmission principale (BTP)

ayant une première limite donnée de couple, ledit premier moteur électrique (11) a une première puissance électrique maximale égale à un premier pourcentage d'un premier produit dudit régime de rotation nominal et de ladite première limite, ledit premier pourcentage étant compris entre 20% et 40% dudit premier produit.

**4.** Installation motrice selon l'une quelconque des revendications 1 à 3,
**caractérisée en ce que**, ladite boîte de transmission principale (BTP) étant entraînée par un premier arbre (21), ledit premier moteur électrique (11) est agencé sur ledit premier arbre (21).

**5.** Installation motrice selon l'une quelconque des revendications 1 à 3,
**caractérisée en ce que** ladite boîte de transmission principale (BTP) étant entraînée par un premier arbre (21), ledit premier moteur électrique (11) est agencé sur un arbre intermédiaire principal (23) distinct dudit premier arbre (21).

**6.** Installation motrice selon l'une quelconque des revendications 1 à 5,
**caractérisée en ce que**, ladite installation motrice (10) étant apte à être agencée sur un hélicoptère (1) pourvu d'une voilure tournante (3) ayant un régime de rotation nominal donné, ladite boîte de transmission principale (BTP) ayant une première limite donnée de couple, ledit deuxième moteur électrique (12) a une deuxième puissance électrique maximale égale à un deuxième pourcentage d'un premier produit dudit régime de rotation nominal et de ladite première limite, ledit deuxième pourcentage étant compris entre 5% et 10% dudit premier produit.

**7.** Installation motrice selon l'une quelconque des revendications 1 à 6,
**caractérisée en ce que**, ladite boîte de transmission arrière (BTA) étant entraînée par un deuxième arbre (22), ledit deuxième moteur électrique (12) est agencé sur ledit deuxième arbre (22).

**8.** Installation motrice selon l'une quelconque des revendications 1 à 6,
**caractérisée en ce que** ladite boîte de transmission arrière (BTA) étant entraînée par un deuxième arbre (22), ledit deuxième moteur électrique (12) est agencé sur un arbre intermédiaire arrière (24) distinct dudit deuxième arbre (22).

**9.** Installation motrice selon l'une quelconque des revendications 1 à 8,
**caractérisée en ce qu'**elle comporte un organe de régulation (30) muni d'un processeur de régulation (31) commandant le premier moteur électrique (11) et le deuxième moteur électrique (12), ledit organe de régulation (30) étant lié électriquement :

   - au premier moteur électrique (11) et au deuxième moteur électrique (12),
   - à au moins une batterie principale (40) dédiée à l'alimentation électrique du premier moteur électrique (11) et du deuxième moteur électrique (12).

**10.** Installation motrice selon la revendication 9,
**caractérisée en ce que** ledit organe de régulation (30) est lié électriquement à au moins une batterie secondaire (100) apte à alimenter le réseau électrique (5) d'un hélicoptère (1),

**11.** Installation motrice selon l'une quelconque des revendications 1 à 10,
**caractérisée en ce que** lesdits premier et deuxième moteurs électriques (11, 12) étant aptes à fonctionner en mode moteur ou en mode générateur d'un courant électrique, ladite installation motrice (10) comporte un moyen d'affichage (50) présentant pour ledit premier moteur électrique (11) et ledit deuxième moteur électrique (12) :

   - une indication de fonctionnement en mode moteur ou en mode générateur, au moins un organe de régulation (30) indiquant le mode de fonctionnement à un processeur d'affichage (51) dudit moyen d'affichage (50),
   - le niveau de charge résiduel d'au moins une batterie principale (40) des premier et deuxième moteurs électriques (11, 12), un premier moyen de mesure (43) mesurant le niveau de charge résiduel et transmettant ce niveau de charge résiduel à un processeur d'affichage (51) dudit moyen d'affichage (50).

**12.** Installation motrice selon la revendication 11,
**caractérisée en ce que** ledit moyen d'affichage (50) présente au moins une des informations suivantes:

   - un temps de fonctionnement restant pour au moins un desdits premier et deuxième moteurs électriques (11, 12), au moins un deuxième moyen de mesure (33) mesurant ledit temps de fonctionnement restant et transmettant ce temps de fonctionnement restant à un processeur d'affichage (51) dudit moyen d'affichage (50),

- une température d'une batterie principale (40) reliée électriquement au premier moteur électrique (11) et au deuxième moteur électrique (12), au moins troisième moyen de mesure (44) mesurant ladite température et transmettant ladite température à un processeur d'affichage (51) dudit moyen d'affichage (50).

13. Installation motrice selon l'une quelconque des revendications 1 à 12,
**caractérisée en ce qu'**elle comporte un moyen d'alarme (60) muni d'un processeur d'alarme (61) générant une alarme quand au moins une des situations suivantes se produit :

- au moins un premier moyen de mesure mesurant le niveau de charge résiduel d'au moins une batterie principale de chaque moteur électrique (11, 12), le moyen d'alarme (60) déclenche une alarme quand le niveau de charge résiduel passe en dessous d'un niveau de charge seuil prédéterminé,
- au moins un deuxième moyen de mesure (33) mesurant un temps de fonctionnement restant pour au moins un desdits premier et deuxième moteurs électriques (11, 12), le moyen d'alarme (60) déclenche une alarme quand ledit temps de fonctionnement passe en dessous d'un temps seuil prédéterminé,
- au moins un troisième moyen de mesure (44) mesurant une température d'une batterie principale. (40) reliée électriquement au premier moteur électrique (11) et au deuxième moteur électrique (12), le moyen d'alarme (60) déclenche une alarme quand ladite température passe au dessus d'une température seuil prédéterminée.

14. Installation motrice selon l'une quelconque des revendications 1 à 13,
**caractérisée en ce que**, lesdits premier et deuxième moteurs électriques (11, 12) étant reliés à au moins une batterie principale électrique (40), ladite installation motrice (10) comporte un moyen de mise hors circuit de ladite batterie principale (40).

15. Hélicoptère (1) muni d'une voilure tournante (3) ainsi que d'un rotor anticouple (4) et d'une installation motrice (10), ladite installation motrice (10) étant munie d'un unique moteur thermique (13) ainsi que d'une boîte de transmission principale (BTP) entraînant ladite voilure tournante (3) et d'une boîte de transmission arrière (BTA) entraînant ledit rotor anticouple (4),
**caractérisé en ce que** ladite installation motrice (10) est selon l'une quelconque des revendications précédentes en comportant un premier moteur électrique (11) mécaniquement lié à ladite boîte de transmission principale (BTP) pour pouvoir mettre en mouvement cette boîte de transmission principale (BTP) et un deuxième moteur électrique (12) mécaniquement lié à ladite boîte de transmission arrière (BTA) pour pouvoir mettre en mouvement cette boîte de transmission arrière (BTA).

16. Procédé pour entraîner une voilure tournante (3) et un rotor anticouple (4) d'un hélicoptère (1), ledit hélicoptère (1) ayant une installation motrice (10) munie d'un unique moteur thermique (13) ainsi que d'une boîte de transmission principale (BTP) entraînant ladite voilure tournante (3) et d'une boîte de transmission arrière (BTA) entraînant ledit rotor anticouple (4), ladite installation motrice (10) comportant un premier moteur électrique (11) mécaniquement lié à ladite boîte de transmission principale (BTP) pour pouvoir mettre en mouvement cette boîte de transmission principale (BTP) et un deuxième moteur électrique (12) mécaniquement lié à ladite boîte de transmission arrière (BTA) pour pouvoir mettre en mouvement cette boîte de transmission arrière (BTA), au cours duquel on réalise au moins une des actions suivantes :

- dans un mode de fonctionnement normal, on entraîne la boîte de transmission principale (BTP) et la boîte de transmission arrière (BTA) à l'aide de l'unique moteur thermique (13),
- dans un premier mode de secours, en cas de survitesse du moteur thermique (13), on passe le premier moteur électrique (11) en mode générateur électrique et le deuxième moteur électrique (12) en mode générateur électrique pour ralentir ledit moteur thermique (13) pendant une première durée prédéterminée, puis si le moteur thermique (13) est toujours en survitesse à l'issue de ladite première durée on arrête le moteur thermique (13) et on passe le premier moteur électrique (11) en mode moteur électrique pour entraîner ladite boîte de transmission principale (BTP) et on passe le deuxième moteur électrique (12) en mode moteur électrique pour entraîner ladite boîte de transmission arrière (BTA),
- dans un deuxième mode de secours, ledit moteur thermique (13) n'étant plus à même de mettre en mouvement ladite boîte de transmission principale (BTP) à une première vitesse donnée, on passe le premier moteur électrique (11) en mode moteur électrique pour au moins participer à l'entraînement de ladite boîte de transmission principale (BTP),
- dans un troisième mode de secours, ledit moteur thermique (13) n'étant plus à même de mettre en mouvement ladite boîte de transmission arrière (BTA) à une deuxième vitesse donnée, on passe le deuxième moteur électrique (12) en mode moteur électrique pour au moins participer à l'entraînement de ladite boîte de transmission arrière (BTA), et,

- dans un quatrième mode de secours, ledit moteur thermique (13) n'étant plus à même de mettre en mouvement ladite boîte de transmission principale (BTP) à une première vitesse donnée et de mettre en mouvement ladite boîte de transmission arrière (BTA) à une deuxième vitesse donnée, on passe le premier moteur électrique (11) en mode moteur électrique pour au moins participer à l'entraînement de ladite boîte de transmission principale (BTP) et on passe le deuxième moteur électrique (12) en mode moteur électrique pour au moins participer à l'entraînement de ladite boîte de transmission arrière (BTA).

## Claims

1. Power plant (10) provided with a single heat engine (13) and with a main gearbox (MGB) suitable for driving the rotary wing (3) of a helicopter (1) and with a tail gearbox (TGB) suitable for driving an anti-torque rotor (4) of a helicopter (1),
   **characterised in that** the power plant includes a first electric motor (11) mechanically connected to said main gearbox (MGB) so as to be capable of driving said main gearbox (MGB) and a second electric motor (12) mechanically connected to said tail gearbox (TGB) so as to be capable of driving said tail gearbox (TGB).

2. Power plant according to Claim 1,
   **characterised in that** said heat engine (13) is connected to said main gearbox (MGB·) by a first shaft (21), said tail gearbox (TGB) being connected by a second shaft (22) to said heat engine (13) or to said main gearbox (MGB).

3. Power plant according to either one of Claims 1 to 2,
   **characterised in that**, with said power plant (10) being suitable for being arranged on a helicopter (1) provided with a rotary wing (3) having a given nominal speed of rotation, and with said main gearbox (MGB) having a given first torque limit, said first electric motor (11) has a first maximum electric power equal to a first percentage of a first product of said nominal speed of rotation and of said first limit, said first percentage lying between 20% and 40% of said first product.

4. Power plant according to any one of Claims 1 to 3,
   **characterised in that**, with said main gearbox (MGB) being driven by a first shaft (21), said first electric motor (11) is arranged on said.first shaft (21).

5. Power plant according to any one of Claims 1 to 3,
   **characterised in that**, with said main gearbox (MGB) being driven by a first shaft (21), said first electric motor (11) is arranged on a main intermediate shaft (23) distinct from said first shaft (21).

6. Power plant according to any one of Claims 1 to 5,
   **characterised in that**, with said power plant (10) being suitable for being arranged on a helicopter (1) provided with a rotary wing (3) having a given nominal speed of rotation, and with said main gearbox (MGB) having a given first torque limit, said second electric motor (12) has a second maximum electric power equal to a second percentage of a first product of said nominal speed of rotation and of said first limit, said second percentage lying between 5% and 10% of said first product.

7. Power plant according to any one of Claims 1 to 6,
   **characterised in that**, with said tail gearbox (TGB) being driven by a second shaft (22), said second electric motor (12) is arranged on said second shaft (22).

8. Power plant according to any one of Claims 1 to 6, **characterised in that**, with said tail gearbox (TGB) being driven by a second shaft (22), said second electric motor (12) is arranged on a tail intermediate shaft (24) distinct from said second shaft (22).

9. Power plant according to any one of Claims 1 to 8,
   **characterised in that** it includes a regulating member (30) provided with a regulating processor (31) controlling the first electric motor (11) and the second electric motor (12), said regulating member (30) being electrically connected:

   - to the first electric motor (11) and to the second electric motor (12);

- to at least one main battery (40) dedicated to electrically powering the first electric motor (11) and the second electric motor (12).

10. Power plant according to Claim 9,
**characterised in that** said regulating member (30) is electrically connected to at least one secondary battery (100) suitable for powering the electrical network (5) of a helicopter (1).

11. Power plant according to any one of Claims 1 to 10,
**characterised in that**, with said first and second electric motors (11, 12) being suitable for operating in motor mode or in electric current generator mode, said power plant (10) includes display means (50) that display for said first electric motor (11) and said second electric motor (12):

- an indication of operation in motor mode or in generator mode, at least one regulating member (30) indicating the mode of operation to a display processor (51) of said display means (50);
- the level of remaining charge in at least one main battery (40) of the first and second electric motors (11, 12), first measurement means (43) measuring the remaining charge level and transmitting said remaining charge level to a display processor (51) of said display means (50).

12. Power plant according to Claim 11,
**characterised in that** said display means (50) displays at least one of the following items of information:

- a remaining operating time for at least one of said first and second electric motors (11, 12), at least second measurement means (33) measuring said remaining operating time and transmitting said remaining operating time to a display processor (51) of said display means (50);
- a temperature of a main battery (40) electrically connected to the first electric motor (11) and to the second electric motor (12), at least third measurement means (44) measuring said temperature and transmitting said temperature to a display processor (51) of said display means (50).

13. Power plant according to any one of Claims 1 to 12, **characterised in that** it includes warning means (60) provided with a warning processor (61) generating a warning when at least one of the following situations occurs:

- with at least first measurement means measuring the remaining charge level of at least one main battery of each electric motor (11, 12), the warning means (60) trigger a warning when the remaining charge level drops below a predetermined threshold charge level;
- with at least second measurement means (33) measuring a remaining operating time for at least one of said first and second electric motors (11, 12), the warning means (60) trigger a warning when said operating time drops below a predetermined threshold time;
- with at least third measurement means (44) measuring a temperature of a main battery (40) electrically connected to the first electric motor (11) and to the second electric motor (12), the warning means (60) trigger a warning when said temperature exceeds a predetermined threshold temperature.

14. Power plant according to any one of Claims 1 to 13,
**characterised in that**, with said first and second electric motors (11, 12) being connected to at least one main electric battery (40), said power plant (10) includes means for disconnecting said main battery (40).

15. Helicopter (1) provided with a rotary wing (3) and with an anti-torque rotor (4) and with a power plant (10), said power plant (10) being provided with a single heat engine (13) and with a main gearbox (MGB) driving said rotary wing (3) and with tail gearbox (TGB) driving said anti-torque rotor (4),
**characterised in that** said power plant (10) is according to any one of the preceding claims, including a first electric motor (11) mechanically connected to said main gearbox (MGB) so as to be capable of driving said main gearbox (MGB), and a second electric motor (12) mechanically connected to said tail gearbox (TGB) so as to be capable of driving said tail gearbox (TGB).

16. Method of driving a rotary wing (3) and an anti-torque rotor (4) of a helicopter (1), said helicopter (1) having a power plant (10) provided with a single heat engine (13) and with a main gearbox (MGB) driving said rotary wing (3) and with a tail gearbox (TGB) driving said anti-torque rotor (4), said power plant (10) including a first electric motor (11) mechanically connected to said main gearbox (MGB) so as to be capable of driving said main gearbox (MGB), and a second electric motor (12) mechanically connected to said tail gearbox (TGB) so as to be capable of driving said tail gearbox (TGB), in which method at least one of the following actions is performed:

- in a normal mode of operation, the main gearbox (MGB) and the tail gearbox (TGB) are driven using the single heat engine (13);
- in a first emergency mode, in the event of overspeed of the heat engine (13), the first electric motor (11) is caused to operate in electric generator mode and the second electric motor (12) is caused to operate in electric generator mode in order to slow down said heat engine (13) during a first predetermined duration, then if the heat engine (13) is still in overspeed at the end of said first duration, the heat engine (13) is stopped and the first electric motor (11) is caused to operate in electric motor mode in order to drive said main gearbox (MGB), and said second electric motor (12) is caused to operate in electric motor mode in order to drive said tail gearbox (TGB);
- in a second emergency mode, with said heat engine (13) being no longer capable of driving said main gearbox (MGB) at a given first speed, the first electric motor (11) is caused to operate in electric motor mode in order to at least contribute to driving said main gearbox (MGB);
- in a third emergency mode, with said heat engine (13) being no longer capable of deriving said tail gearbox (TGB) at a given second speed, the second electric motor (12) is caused to operate in electric motor mode in order to at least contribute to driving said tail gearbox (TGB); and
- in a fourth emergency mode, with said heat engine (13) being no longer capable of driving said main gearbox (MGB) at a given first speed and of driving said tail gearbox (TGB) at a given second speed, the first electric motor (11) is caused to operate in electric motor mode in order to at least contribute to driving said main gearbox (MGB), and the second electric motor (12) is caused to operate in electric motor mode in order to at least contribute to driving said tail gearbox (TGB).

**Patentansprüche**

1. Antriebseinrichtung (10), die mit einer einzigen Verbrennungskraftmaschine (13) sowie mit einem Hauptgetriebe (BTP), das geeignet ist, den Rotor (3) eines Hubschraubers (1) anzutreiben, und einem Heckgetriebe (BTA) ausgerüstet ist, das geeignet ist, einen Heckrotor (4) eines Hubschraubers (1) anzutreiben,
**dadurch gekennzeichnet, dass** sie einen ersten Elektromotor (11), der mechanisch mit dem Hauptgetriebe (BTP) verbunden ist, um das Hauptgetriebe (BTP) in Gang setzen zu können, und einen zweiten Elektromotor (12) aufweist, der mechanisch mit dem Heckgetriebe (BTA) verbunden ist, um das Heckgetriebe (BTA) in Gang setzen zu können.

2. Antriebseinrichtung nach Anspruch 1,
**dadurch gekennzeichnet, dass** die Verbrennungskraftmaschine (13) durch eine erste Welle (21) mit dem Hauptgetriebe (BTP) verbunden ist, wobei das Heckgetriebe (BTA) durch eine zweite Welle (22) mit der Verbrennungskraftmaschine (13) oder mit dem Hauptgetriebe (BTA) verbunden ist.

3. Antriebseinrichtung nach einem der Ansprüche 1 bis 2,
**dadurch gekennzeichnet, dass** bei Eignung der Antriebseinrichtung (10) zur Anordnung an einem Hubschrauber (1), der mit einem Rotor (3) versehen ist, der eine gegebene nominelle Betriebsdrehzahl aufweist, wobei das Hauptgetriebe (BTP) einen ersten gegebenen Grenzwert des Drehmoments besitzt, der erste Elektromotor (11) eine erste maximale elektrische Leistung besitzt, die gleich einem ersten Prozentsatz eines ersten Produkts der nominellen Betriebsdrehzahl und des ersten Grenzwertes ist, wobei der erste Prozentsatz zwischen 20 % und 40 % des ersten Produkts liegt.

4. Antriebseinrichtung nach einem der Ansprüche 1 bis 3,
**dadurch gekennzeichnet, dass** bei Antrieb des Hauptgetriebes (BTP) durch eine erste Welle (21) der erste Elektromotor (11) auf der ersten Welle (21) angeordnet ist.

5. Antriebseinrichtung nach einem der Ansprüche 1 bis 3,
**dadurch gekennzeichnet, dass** bei Antrieb des Hauptgetriebes (BTP) durch eine erste Welle (21) der erste Elektromotor (11) auf einer Haupt-Zwischenwelle (23) angeordnet ist, die von der ersten Welle (21) verschieden ist.

6. Antriebseinrichtung nach einem der Ansprüche 1 bis 5,
**dadurch gekennzeichnet, dass** bei Eignung der Antriebseinrichtung (10) zur Anordnung an einem Hubschrauber (1), der mit einem Rotor (3) versehen ist, der eine gegebene nominelle Betriebsdrehzahl aufweist, wobei das Hauptgetriebe (BTP) einen ersten gegebenen Grenzwert des Drehmoments besitzt, der zweite Elektromotor (12) eine zweite maximale elektrische Leistung besitzt, die gleich einem zweiten Prozentsatz eines ersten Produkts der nominellen Betriebsdrehzahl und des ersten Grenzwertes ist, wobei der zweite Prozentsatz zwischen 5 % und 10 % des ersten Produkts liegt.

7. Antriebseinrichtung nach einem der Ansprüche 1 bis 6,
**dadurch gekennzeichnet, dass** bei Antrieb des Heckgetriebes (BTA) durch eine zweite Welle (22) der zweite Elektromotor (12) auf der zweiten Welle (22) angeordnet ist.

8. Antriebseinrichtung nach einem der Ansprüche 1 bis 6,
**dadurch gekennzeichnet, dass** bei Antrieb des Heckgetriebes (BTA) durch eine zweite Welle (22) der zweite Elektromotor (12) an einer Heck-Zwischenwelle (24) angeordnet ist, die von der zweiten Welle (22) verschieden ist.

9. Antriebseinrichtung nach einem der Ansprüche 1 bis 8,
**dadurch gekennzeichnet, dass** sie eine Regelungseinheit (30) aufweist, die mit einem Regelungsprozessor (31) ausgestattet ist, der den ersten Elektromotor (11) und den zweiten Elektromotor (12) steuert, wobei die Regelungseinheit (30) elektrisch verbunden ist

   - mit dem ersten Elektromotor (11) und dem zweiten Elektromotor (12),
   - mindestens einer Hauptbatterie (40), die zur elektrischen Versorgung des ersten Elektromotors (11) und des zweiten Elektromotors (12) vorgesehen ist.

10. Antriebseinrichtung nach Anspruch 9,
**dadurch gekennzeichnet, dass** die Regelungseinheit (30) mit mindestens einer Sekundärbatterie (100) elektrisch verbunden ist, die geeignet ist, das Stromnetz (5) eines Hubschraubers (1) zu versorgen.

11. Antriebseinrichtung nach einem der Ansprüche 1 bis 10,
**dadurch gekennzeichnet, dass** bei Eignung des ersten und des zweiten Elektromotors (11, 12) zum Betrieb im Motormodus oder im Generatormodus unter Stromerzeugung die Antriebseinrichtung (10) eine Anzeigeeinrichtung (50) aufweist, die für den ersten Elektromotor (11) und den zweiten Elektromotor (12) darstellt:

   - eine Anzeige des Betriebs im Motormodus oder im Generatormodus, wobei mindestens eine Regelungseinheit (30) den Betriebsmodus einem Anzeigeprozessor (51) der Anzeigeeinrichtung (50) angibt,
   - das Restladungsniveau mindestens einer Hauptbatterie (40) des ersten und des zweiten Elektromotors (11, 12), wobei eine erste Messeinrichtung (43) das Restladungsniveau misst und dieses Restladungsniveau an einen Anzeigeprozessor (51) der Anzeigeeinrichtung (50) überträgt.

12. Antriebseinrichtung nach Anspruch 11,
**dadurch gekennzeichnet, dass** die Anzeigeeinrichtung (50) mindestens eine der folgenden Informationen darstellt:

   - eine Betriebsdauer, die für den ersten und/oder den zweiten Elektromotor (11, 12) verbleibt, wobei mindestens eine zweite Messeinrichtung (33) diese verbleibende Betriebsdauer misst und diese verbleibende Betriebsdauer an einen Anzeigeprozessor (51) der Anzeigeeinrichtung (50) überträgt,
   - eine Temperatur einer Hauptbatterie (40), die mit dem ersten Elektromotor (11) und dem zweiten Elektromotor (12) elektrisch verbunden ist, wobei mindestens eine dritte Messeinrichtung (44) diese Temperatur misst und diese Temperatur an einen Anzeigeprozessor (51) der Anzeigeeinrichtung (50) überträgt.

13. Antriebseinrichtung nach einem der Ansprüche 1 bis 12,
**dadurch gekennzeichnet, dass** sie eine Alarmeinrichtung (60) aufweist, die mit einem Alarmprozessor (61) ausgestattet ist, der einen Alarm erzeugt, wenn mindestens eine der folgenden Situationen eintritt:

   - bei Messung des Restladungsniveaus mindestens einer Hauptbatterie jedes Elektromotors (11, 12) durch mindestens eine erste Messeinrichtung löst die Alarmeinrichtung (60) einen Alarm aus, wenn das Restladungsniveau unter einen vorgegebenen Schwellenwert des Ladungsniveaus fällt,
   - bei Messung einer verbleibenden Betriebsdauer für den ersten und/oder den zweiten Elektromotor (11, 12) durch mindestens eine zweite Messeinrichtung (33) löst die Alarmeinrichtung (60) einen Alarm aus, wenn diese verbleibende Betriebsdauer unter einen vorgegebenen Schwellenwert der Betriebsdauer fällt,
   - bei Messung einer Temperatur einer Hauptbatterie (40), die mit dem ersten Elektromotor (11) und dem zweiten Elektromotor (12) elektrisch verbunden ist, durch mindestens eine dritte Messeinrichtung (44) löst die Alarmeinrichtung (60) einen Alarm aus, wenn diese Temperatur unter einen vorgegebenen Schwellenwert der Temperatur fällt.

14. Antriebseinrichtung nach einem der Ansprüche 1 bis 13, **dadurch gekennzeichnet, dass** bei elektrischer Verbindung des ersten und des zweiten Elektromotors (11, 12) mit mindestens einer elektrischen Hauptbatterie (40) die Antriebseinrichtung (10) eine Einrichtung zum Abschalten der Hauptbatterie (40) aufweist.

15. Hubschrauber (1) mit einem Rotor (3) sowie einem Heckrotor (4) und einer Antriebseinrichtung (10), wobei die Antriebseinrichtung (10) mit einer einzigen Verbrennungskraftmaschine (13) sowie mit einem Hauptgetriebe (BTP), das den Rotor (3) antreibt, und einem Heckgetriebe (BTA), das den Heckrotor (4) antreibt, ausgerüstet ist, **dadurch gekennzeichnet, dass** die Antriebseinrichtung (10) eine Antriebseinrichtung gemäß einem der vorhergehenden Ansprüche ist und einen ersten Elektromotor (11), der mechanisch mit dem Hauptgetriebe (BTP) verbunden ist, um das Hauptgetriebe (BTP) in Gang setzen zu können, und einen zweiten Elektromotor (12) aufweist, der mechanisch mit dem Heckgetriebe (BTA) verbunden ist, um das Heckgetriebe (BTA) in Gang setzen zu können.

16. Verfahren zum Antreiben eines Rotors (3) und eines Heckrotors (4) eines Hubschraubers (1), wobei der Hubschrauber (1) eine Antriebseinrichtung (10) aufweist, die mit einer einzigen Verbrennungskraftmaschine (13) sowie mit einem Hauptgetriebe (BTP), das den Rotor (3) antreibt, und einem Heckgetriebe (BTA), das den Heckrotor (4) antreibt, ausgerüstet ist, wobei die Antriebseinrichtung (10) einen ersten Elektromotor (11), der mechanisch mit dem Hauptgetriebe (BTP) verbunden ist, um das Hauptgetriebe (BTP) in Gang setzen zu können, und einen zweiten Elektromotor (12) aufweist, der mechanisch mit dem Heckgetriebe (BTA) verbunden ist, um das Heckgetriebe (BTA) in Gang setzen zu können,
bei dem mindestens eine der folgenden Funktionen durchgeführt wird:

- in einem Normalbetriebsmodus werden das Hauptgetriebe (BTP) und das Heckgetriebe (BTA) mit der einzigen Verbrennungskraftmaschine (13) angetrieben,
- in einem ersten Notfallmodus im Fall einer Überdrehzahl der Verbrennungskraftmaschine (13) werden der erste Elektromotor (11) in den Generatormodus unter Stromerzeugung und der zweite Elektromotor (12) in den Generatormodus unter Stromerzeugung geschaltet, um die Verbrennungskraftmaschine (13) während einer ersten vorgegebenen Zeitdauer abzubremsen, worauf, wenn die Verbrennungskraftmaschine (13) am Ende der ersten Zeitdauer noch immer Überdrehzahl aufweist, die Verbrennungskraftmaschine (13) abgestellt wird und der erste Elektromotor (11) in den Elektromotormodus zum Antreiben des Hauptgetriebes (BTP) und der zweite Elektromotor (12) in den Elektromotormodus zum Antreiben des Heckgetriebes (BTA) geschaltet werden,
- in einem zweiten Notfallmodus, wenn die Verbrennungskraftmaschine (13) nicht mehr in der Lage ist, das Hauptgetriebe (BTP) mit einer ersten gegebenen Drehzahl in Gang zu setzen, wird der erste Elektromotor (11) in den Elektromotormodus geschaltet, um am Antrieb des Hauptgetriebes (BTP) zumindest mitzuwirken,
- in einem dritten Notfallmodus, wenn die Verbrennungskraftmaschine (13) nicht mehr in der Lage ist, das Heckgetriebe (BTA) mit einer zweiten gegebenen Drehzahl in Gang zu setzen, wird der zweite Elektromotor (12) in den Elektromotormodus geschaltet, um am Antrieb des Heckgetriebes (BTA) zumindest mitzuwirken, und
- in einem vierten Notfallmodus, wenn die Verbrennungskraftmaschine (13) nicht mehr in der Lage ist, das Hauptgetriebe (BTP) mit einer ersten gegebenen Drehzahl in Gang zu setzen und das Heckgetriebe (BTA) mit einer zweiten gegebenen Drehzahl in Gang zu setzen, werden der erste Elektromotor (11) in den Elektromotormodus geschaltet, um am Antrieb des Hauptgetriebes (BTP) zumindest mitzuwirken, und der zweite Elektromotor (12) in den Elektromotormodus geschaltet, um am Antrieb des Heckgetriebes (BTA) zumindest mitzuwirken.

Fig.1

Fig.2

Fig.3

22

TGB1

12"    24    12

12'

3

1

12

21

13

11    MGB

TGB

22

2

4

50    51    30    100

33

31    32

5

61    41

43    43

200

60    42

44    40    44

Fig.4

**EP 2 327 625 B1**

**RÉFÉRENCES CITÉES DANS LA DESCRIPTION**

**Documents brevets cités dans la description**

- FR 2769684
- EP 2148066 A